# EUROPEAN PATENT APPLICATION

(11) **EP 4 350 052 A2**
(43) Date of publication of application: **10.04.2024**
(21) Application number: 23196248.1
(22) Date of filing: 08.09.2023
(51) Int. Cl.: C25B 9/23, C25B 11/073, C25B 11/081, C25B 13/04

(54) **MANUFACTURING METHOD FOR ELECTROLYTE MEMBRANE INCLUDING NOBLE METAL PARTICLES, ELECTROLYTE MEMBRANE INCLUDING NOBLE METAL PARTICLES, MEMBRANE ELECTRODE ASSEMBLY, ELECTROCHEMICAL CELL, STACK, AND ELECTROLYZER**

(30) Priority: 20.09.2022 JP 2022149624
(71) Applicant: KABUSHIKI KAISHA TOSHIBA, Minato-ku Tokyo 105-0023 (JP); Toshiba Energy Systems & Solutions Corporation, Kawasaki-shi, Kanagawa 212-0013 (JP)
(72) Inventor: NAKANO, Yoshihiko, Tokyo (JP); YOSHINAGA, Norihiro, Tokyo (JP)
(74) Representative: Marks & Clerk LLP

(57) **Abstract**

A manufacturing method for a electrolyte membrane including noble metal particles according to an embodiment includes a step of impregnating cationic noble metal complex ions with a first region of a surface of a cation exchange membrane by spraying solution containing the cationic noble metal complex ions on the cation exchange membrane and drying the sprayed member, and a step of applying a reducing treatment to the cation exchange membrane impregnated with the cationic noble metal complex ions.

## Description

### FIELD

The present embodiments relate to a manufacturing method for electrolyte membrane including noble metal particles, an electrolyte membrane including noble metal particles, a membrane electrode assembly, an electrochemical cell, a stack, and an electrolyzer.

### BACKGROUND

In recent years, electrochemical cells have been actively studied. Among electrochemical cells, for example, a polymer electrolyte membrane electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes.

### BRIEF DESCRIPTION OF THE DRAWINGS

FIG. 1 is a cross-sectional schematic diagram of an electrolyte membrane including noble metal particles according to an embodiment.
FIG. 2 is a flowchart of a manufacturing method for electrolyte membrane including noble-metal particles.
FIG. 3 is a schematic diagram of spray apparatus according to an embodiment.
FIG. 4 is a schematic diagram of a membrane electrode assembly according to an embodiment.
FIG. 5 is a schematic diagram of an electrochemical cell according to an embodiment.
FIG. 6 is a schematic diagram of a stack according to an embodiment.
FIG. 7 is a conceptual diagram of an electrolyzer according to an embodiment.

### DETAILED DESCRIPTION

A manufacturing method for a electrolyte membrane including noble metal particles according to an embodiment includes a step of impregnating cationic noble metal complex ions with a first region of a surface of a cation exchange membrane by spraying solution containing the cationic noble metal complex ions on the cation exchange membrane and drying the sprayed member, and a step of applying a reducing treatment to the cation exchange membrane impregnated with the cationic noble metal complex ions.

Hereinafter, the embodiments will be described with reference to the drawings.

It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

### (FIRST EMBODIMENT)

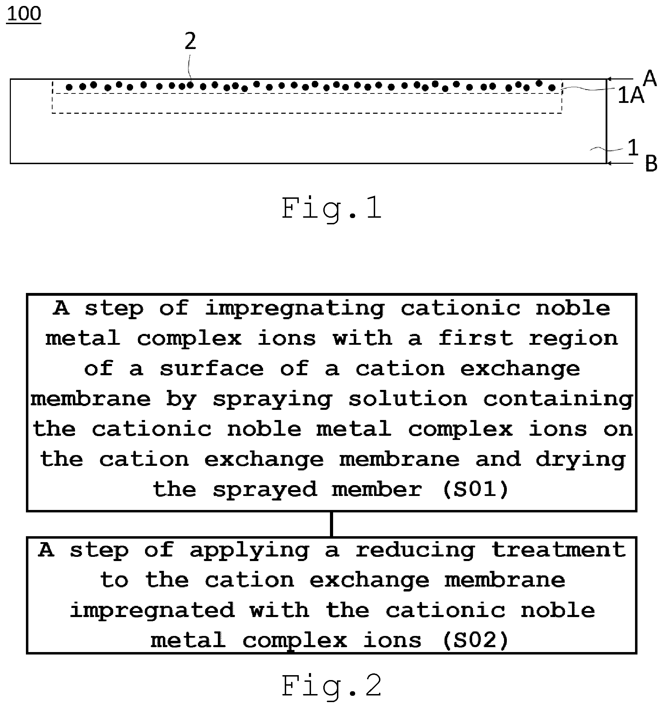

The first embodiment relates to an electrolyte membrane including noble metal particles and a manufacturing method for an electrolyte membrane including noble metal particles. FIG. 1 shows a cross-sectional schematic diagram of an electrolyte membrane 100 including noble-metal particles according to an embodiment. The electrolyte membrane 100 including noble metal particles includes a cation exchange membrane 1 and noble metal particles 2. A region 1A surrounded by a broken line provided on a first surface A which is a main surface of a cation exchange membrane is a first region 1A. The first region 1A is surrounded by broken lines because a size of the first region may vary and not constant depending on the electrolyte membrane 100 including noble metal particles. The noble metal particles 2 are included in the cation exchange membrane on the first surface A side excluding, for example, a peripheral region (outer peripheral region). It is preferable that the electrolyte membrane 100 including noble metal particles is used as an electrolyte membrane of a hydrogen generation apparatus. Descriptions relating to the electrolyte membrane 100 including noble metal particles applicable to descriptions relating to a manufacturing method for the electrolyte membrane 100 including noble metal particles.

The cation exchange membrane 1 is has a proton-conductivity a membrane which is electrically insulated from the first surface A to a second surface B. As the cation exchange membrane 1, fluorinated polymers having an organic group selected from the group consisting of a sulfonic acid group, a sulfonimide group, and a sulfate group are preferable. As the cation exchange membrane 1, fluorinated polymers having a sulfonic acid group are preferable. NAFION (trademark, DuPont), FLEMION (trademark, Asahi Glass Co., Ltd.), SELEMION (trademark, Asahi Glass Co., Ltd.), Aquivion (trademark, Solvay Specialty Polymers) or Aciplex (trademark, Asahi Kasei Corp.) or the like can be used as the fluorinated polymers having the sulfonic acid group.

A thickness of the cation exchange membrane is chosen appropriately in consideration of a membrane permeability, durability and the like. In view of the strength, anti-solubility, and output characteristics of MEA, the thickness of the cation exchange membrane 1 is preferably 20 [µm] or more and 500 [µm] or less, more preferably 50 [µm] or more and 300 [µm] or less, and still more preferably 80 [µm] or more and 200 [µm] or less.

The noble metal particles 2 are included in the cation exchange membrane. The noble metal particles 2 are particles including one or more kinds of noble metal elements selected from the group consisting of Pt, Re, Rh, Ir, Pd, and Ru. The noble metal particles 2 may include or optionally include alloy particles containing one or more kinds of noble metal elements selected from the group consisting of Pt, Re, Rh, Ir, Pd, and Ru. It is preferable that the noble metal particles 2 are particles of one kind of noble metal element selected from the group consisting of Pt, Re, Rh, Ir, Pd, and Ru. It is preferable that the noble metal particles 2 are particles of Pt. It is preferable that the noble metal particles 2 are particles of Re. It is preferable that the noble metal particles 2 are particles of Rh. It is preferable that the noble metal particles 2 are particles of Ir. It is preferable that the noble metal particles 2 are particles of Pd. It is preferable that the noble metal particles 2 are particles of Ru.

When a cation exchange membrane is used for a MEA and crossover that hydrogen is moved from a cathode side to an anode side occurs, hydrogen concentration is increased, and the hydrogen concentration may exceed 4% that is a lower explosion limit. When the electrolyte membrane 100 including the noble metal particles is used, hydrogen on moving in the electrolyte membrane 100 containing noble metal particles contacts oxygen which is on moving from the anode side to the cathode side and the noble metal particles 2, and water generated due to oxidizing of hydrogen. If the crossover of hydrogen occurs, the noble metal particles 2 work as catalyst, and hydrogen is reduced. The electrolyte membrane 100 containing noble metal particles can also oxidize hydrogen which is leaked by going around the electrolyte membrane 100 containing noble metal particles. The hydrogen concentration can be effectively decreased because the electrolyte membrane 100 containing noble metal particles reduces the crossover of hydrogen and oxidize hydrogen which is moved by the crossover.

An average circumscribed circle diameter of the noble metal particles 2 is preferably 0.2 [nm] or more and 1000 [nm] or less, 0.5 [nm] or more and 1000 [nm] or less, more preferably 0.5 [nm] or more and 300 [nm] or less, and still more preferably 1 [nm] or more and 30 [nm] or less. When the average circumscribed circle diameter of the noble metal particles 2 is sub-nanometer order, hydrogen oxidizing efficiency is decreased due to quantum effect, and lots of the noble metal particles 2 are required. When the average circumscribed circle diameter of the noble metal particles 2 is large, lots of the noble metal particles 2 are required to oxidize hydrogen effectively. The average circumscribed circle diameter of the noble metal particles 2 is obtained by observing a cross-section as shown in FIG. 1 using SEM (Scanning Electron Microscope) or TEM (Transmission Electron Microscope).

It is preferable that the first region 1A of the cation exchange membrane 1 including the noble metal particles 2 are locally present in a region from the surface (first surface A) to less than 50 % of the thickness of the cation exchange membrane 1. It is more preferable that the first region 1A of the cation exchange membrane 1 including the noble metal particles 2 are unevenly present in a region from the surface (first surface A) to less than 30 % of the thickness of the cation exchange membrane 1. The first region 1A (anode side) exists from the first surface A (Start place: Anode electrode) to a depth of less than 50% of the thickness of the cation exchange member 1 toward the second surface B. For Example, when the first region is narrow, the small region of broken line or the like is the first region 1A. For Example, when the first region is wide, the large region of broken line or the like is the first region 1A. It is preferable that the noble metal particles 2 are included within the cation exchange membrane 1 in vicinity of the surface of the cation exchange membrane 1.

In the FIG. 1, the first region 1A excludes the peripheral region of the cation exchange membrane 1. The peripheral region of the electrolyte membrane used for MEA, not limited to the cation exchange membrane may not limited to the electrolyte membrane 100 including noble metal particles, may not be in contact with the electrode. For example, the hydrogen crossover from a surface of an electrolyte membrane facing which is in direct contact with a gasket is not easy to occur. Accordingly, the first region 1A of the electrolyte membrane 100 including the noble metal particles may not exist in the peripheral region of the cation exchange membrane. The peripheral region of the cation exchange membrane 1 which does not include the noble metal particles 2 is excluded from the first region 1A. The following is an example of the cation exchange membrane 1 with one side of 5 cm. The noble metal particles 2 exist from outer region to within 4000 [µm] toward the center. The first region 1A is 4 [cm] x 4 [cm] square region on the center side of the cation exchange membrane 1 and the first region 1A exists from the first surface A to a depth of 30 % of the thickness of the cation exchange membrane 1 toward the second surface B. When the noble metal particle 2 exist entirely on the first side A, the first region 1A is 5 [cm] x 5 [cm] square region on the center side of the cation exchange membrane 1 and the first region 1A exists from the first surface A to a depth of 30 % of the thickness of the cation exchange membrane 1 toward the second surface B.

The amount of the noble metal particles 2 which exist in the first region is preferably 80 [wt%] or more and 100 [wt%] or less of the noble metal particles 2 which exist in the cation exchange membrane 1, more preferably 90 [wt%] or more and 100 [wt%] or less of the noble metal particles 2 which exist in the cation exchange membrane 1, and still more preferably 95 [wt%] or more and 100 [wt%] or less of the noble metal particles 2 which exist in the cation exchange membrane 1. If the noble metal particles 2 exist entirely in the cation exchange membrane, hydrogen which does not relate to the crossover may be also oxidized. It is preferable that the noble metal particles 2 exist unevenly on the first surface A side to oxidize leaked hydrogen selectively.

The amount of the noble metal particles 2 included in the cation exchange membrane 1 is preferably 0.01 [mg/cm²] or more and 1 [mg/cm²] or less, and more preferably 0.05 [mg/cm²] or more and 0.2 [mg/cm²] or less. The amount of the noble metal particles 2 included on the first surface side A of the cation exchange membrane 1 is preferably 0.01 [mg/cm²] or more and 1 [mg/cm²] or less, and more preferably 0.05 [mg/cm²] or more and 0.2 [mg/cm²] or less.

It is preferable that the noble metal particles 2 in the first region 1A are dispersed uniformly. When the electrolyte membrane 100 including noble metal particles are manufactured by a manufacturing method according to the embodiment, the noble metal particles 2 exist in the narrow first region 1A together and dispersibility of the noble metal particles 2 becomes high. The dispersibility of the noble metal particles 2 is evaluated by observing a cross-section as shown in FIG. 1 using SEM (Scanning Electron Microscope) or TEM (Transmission Electron Microscope). The cross-section which is parallel to the long side of the cation exchange membrane 1 and is through the center of the cation exchange membrane 1 is observed and mapping of the noble metal particles 2 in the first region 1A is processed. For the mapping, EDX (Energy Dispersive X-ray Spectroscope) can be used. Accordingly, a polygon (Voronoi diagram) formed by connecting lines passing through the middle of two adjacent noble metal particles is obtained. The Voronoi diagrams of all the noble metal particles 2 shown in the observed cross-section are determined. A standard deviation of area of the determined Voronoi diagrams is calculated. When the standard deviation calculated from the area of the Voronoi diagrams is within a predetermined range, the noble metal particles 2 is considered to be in a uniformly dispersed state.

A manufacturing method for the electrolyte membrane 100 including noble metal particles will be described. FIG. 2 shows a flowchart of a manufacturing method for electrolyte membrane including noble-metal particles. A manufacturing method for a electrolyte membrane 100 including noble metal particles according to an embodiment includes a step of impregnating cationic noble metal complex ions with a first region 1A of a surface of a cation exchange membrane 1 by spraying solution containing the cationic noble metal complex ions on the cation exchange membrane 1 and drying the sprayed member (S01), and a step of applying a reducing treatment to the cation exchange membrane impregnated with the cationic noble metal complex ions (S02).

The step of impregnating cationic noble metal complex ions with the first region 1A of the surface of the cation exchange membrane 1 by spraying solution containing the cationic noble metal complex ions on the cation exchange membrane 1 and drying the sprayed member (S01) will be described.

The solution containing the cationic noble metal complex ions is solution that cationic noble metal complex salt is dissolved in water or/and mixed solvent of water and a water-soluble organic solvent.

The cationic noble metal complex salt is ionized into the cationic noble metal complex ion and counter-ion. The cationic noble metal complex ion includes one or more kinds of ions of noble metals selected from the group consisting of Pt, Re, Rh, Ir, Pd, and Ru and a neutral molecule as a ligand.

The cationic noble metal complex salt is represented by [MA1ₓ]^{a}· [A2_{y}^{b}]. When the cationic noble metal complex salt contains water molecules, the water molecules are ignored in the description of the embodiment. M of [MA1ₓ]^{a}· [A2_{y}^{b}] is one or more kinds of noble metals selected from the group of Pt, Re, Rh, Ir, Pd, and Ru. A1 of [MA1ₓ]^{a}·[A2_{y}^{b}] is a neutral molecule, NH₃ or amine. A2 of [MA1ₓ]^{a}·[A2_{y}^{b}] is counter-ion (anion), for example, halogen. "a" of [MA1ₓ]^{a}·[A2_{y}^{b}] is a number of ionic valence of the cationic noble metal complex ion. "a" of [MA1ₓ]^{a}·[A2_{y}^{b}] is a integer, preferably +2 or more and +6 or less. "b" of [MA1ₓ]^{a}·[A2_{y}^{b}] is a number of ionic valence of the counter-ion. "b" of [MA1ₓ]^{a}·[A2_{y}^{b}] is preferably 1 or more and 2 or less.

Specifically the cationic noble metal complex salt is not limited to one or more selected from the group consisting of [Pt(NH₃)₄]Cl₂, [Pt(NH₃)₆]Cl₄, [Pd(NH₃)₄]Cl₂, [Pd(NH₃)₄]Br₂, [Pd(C₂H₈N₂)₂]Cl₂, [Ru(NH₃)₆]Cl₃, [Ir(NH₃)₆]Cl₃, [Ir(NH₃)₅]Cl₂, [Ru(NH₃)₆]Cl₃, and [Rh(NH₃)₆]Cl₃. The cationic noble metal complex salt is preferably one or more kinds selected from the group consisting of an ammine complex and an amine complex.

It is preferable that the water-soluble organic solvent is one or more kinds selected from the group consisting of alcohols and non-protic polar solvents. Specifically, the alcohols are not limited to methanol, ethanol, isopropanol, 1-propanol, ethylene glycol and propylene glycol. Specifically, the non-protic polar solvents are not limited to dimethylformamide, dimethyl sulfoxide, acetone, acetonitrile, and N-methylpyrrolidone. When large amount of the water-soluble organic solvent is added to the solution, a complex salt is educed because the cationic noble metal complex salt is difficult to dissolve in the water-soluble organic solvent. Therefore, it is preferable that the appropriate amount of the water-soluble organic solvent to be added is added depending on the kind of additive solvent.

A concentration of the cationic noble metal complex ion in solution containing the cationic noble metal complex ion (a concentration of the cationic noble metal complex salt dissolved in a solvent) is preferably 0.05 [wt%] or more and 5 [wt%] or less.

When the cation exchange membrane 1 is sprayed continuously, the impregnation on the surface of the cation exchange membrane may be inadequate. Therefore, it is preferable in the embodiment that spraying solution containing the cationic noble metal complex ions on the cation exchange membrane 1 and drying are performed alternately and repeatedly. When all the solution is sprayed, the dispersibility of the noble metal particles 2 after treatment of reduction may be low. Therefore, it is preferable that the spraying and the drying are performed alternately and repeatedly. When small amount of the solution is sprayed at a single spray and drying treatment is performed for each spraying, the noble metal complex ion can be impregnated not to be dispersed unevenly in a narrow region. Additionally, spraying and drying are preferably performed alternately and repeatedly.

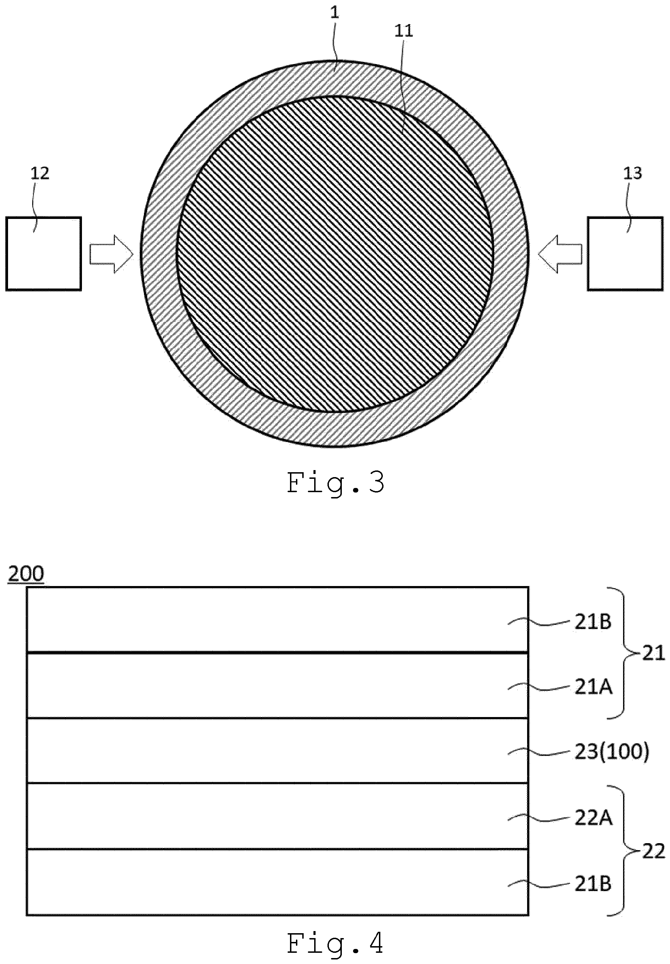

Several types of spray coating apparatuses and methods are known. Specifically, example of the spray apparatus is not limited to a spray apparatus having a rotating drum (electrolyte membrane is fixed) and a spray nozzle which can reciprocate parallel to the rotating drum. The method is not limited to the above. In view of performing spraying and draying repeatedly and alternately, it is preferable that the cation exchange membrane 1 is fixed on the rotating drum 11 and the cation exchange membrane 1 is rotated as shown a diagram of a spray apparatus in FIG. 3. The rotating cation exchange membrane 1 is sprayed from the spray apparatus 12 (the spray nozzle reciprocates between right edge of the rotating drum and left edge of the rotating drum during coating by spraying), and the solution containing the cationic noble metal complex ion is sprayed. Additionally, hot air is applied to the cation exchange membrane to dry the cation exchange membrane from the drying apparatus 13 which is located at a different position from the spray apparatus.

A temperature of the hot air is preferably 30 [°C] or more and 120 [°C] or less, and more preferably 40 [°C] or more and 80 [°C] or less. If the temperature of hot air is too low. drying is insufficient and drying may become more insufficient because the spraying is performed repeatedly on the cation exchange membrane 1 which is barely dry. If the temperature is too high, it is not preferable that impregnation on the membrane with solution becomes difficult because the electrolyte membrane is also dried.

A temperature of a surface of the cation exchange membrane 1 that is warmed with hot air is, for example, 30 [°C] or more and 60 [°C] or less.

The cation exchange membrane is heated by heating a surface of the rotating drum 11. When the cation exchange membrane is warmed from both sides, the impregnation of cationic noble metal complex ion on the surface of cation exchange membrane by spraying is performed effectively.

The amount of the noble metal ion (the amount is converted to the amount of noble metal atoms) of a surface of the cation exchange membrane 1 that is coated with the solution containing the cationic noble metal complex ion after spraying and drying are finished is preferably 0.01 [mg/cm²] or more and 1 [mg/cm²] or less, and more preferably 0.05 [mg/cm²] or more and 0.2 [mg/cm²] or less.

When the cation exchange membrane 1 is impregnated with the solution containing the cationic noble metal complex ion, protons of the cation exchange membrane 1 and the cationic noble metal complex ions are exchanged. The cationic noble metal complex ions impregnate on a surface of the cation exchange membrane 1 uniformly by repeating the ion exchange, spray, and drying. The dispersibility of the cationic noble metal complex ions is good because the cationic noble metal complex ions are ionically bond to sulfonic acid groups or the like of the cation exchange membrane. By virtue of the good dispersibility, particle size variation of the noble metal particles 2 formed after the reducing becomes also good. The noble metal particles 2 exist locally in the first region 1A and the dispersibility becomes high due to the repeating the small amount of spraying and drying.

A region which is not impregnated (not easy to be impregnated) with the solution containing the cationic noble metal complex ions can be formed by spraying on the cation exchange membrane 1 with mask which is fixed on the rotating drum.

If the cation exchange membrane 1 is impregnated entirely in solution containing the cationic noble metal complex ions, a different membrane with a different ratio of the noble metal particles 2 is obtained each time without adjusting the concentration of the cationic noble metal complex ions in the solution each time. If a membrane having different characteristics is obtained, it is no preferable that the reliability is degraded. If the cation exchange membrane 1 is impregnated entirely in solution containing the cationic noble metal complex ions, local impregnation on the cation exchange membrane 1 with the solution containing the cationic noble metal complex ions is difficult. In view of the dispersibility of the noble metal particles 2 in the cation exchange membrane 1, the method of spraying and drying repeatedly is preferable.

The step of applying a reducing treatment to the cation exchange membrane impregnated with the cationic noble metal complex ions (S02) will be described. Performing the reducing treatment, the noble metal particles 2 are formed due to the reduction of the cationic noble metal complex ions.

As the reducing method, a method contacting the cation exchange membrane 1 which is impregnated with the cationic noble metal complex ions with a reducing solution and a method treating the cation exchange membrane 1 which is impregnated with the cationic noble metal complex ions in an atmosphere of reducing gas are preferred.

When the electrolyte membrane 100 including the noble metal particles is manufactured by the method according to the embodiment, most of noble metal exist as the noble metal particles 2 formed by spraying on the surface of the cation exchange membrane 1. A loading ratio of the noble metal particles 2 ([the amount [mg/cm²] of the noble metal particles 2 in the first region 1A] / [the amount [mg/cm²] of noble metals of the noble metal complex contained in the sprayed solution]) is very high. If an anionic noble metal complex salt is used for the cation exchange membrane 1, the loading ratio is very low. This teaches that the spray coating according to the embodiment and the combination of the cation exchange membrane 1 and the cationic noble metal complex ion contributes to the formation of the well-dispersed noble metal particles which present in the first region 1A locally.

A reducing agent containing in the reducing solution is preferably one or more compound selected from the group consisting of hydrazine salts, ammonia, NaBH₄, LiAlH, hypophosphites, formalin, sulfites, and ascorbates. A reducing agent containing in the reducing solution is preferably one or more compound selected from the group consisting of hydrazine salts, ammonia, NaBH₄, hypophosphites, formalin, sulfites, and ascorbates.

When the cation exchange membrane 1 which is impregnated with the cationic noble metal complex ions is in contact with the reducing solution, it is preferable that the cation exchange membrane 1 which is impregnated with the cationic noble metal complex ions is immersed in the reducing solution. It is appropriate for the immersing that the cation exchange membrane 1 is fixed on a frame, and an angle of the first surface A to a liquid surface of the reducing solution becomes vertical or approximately vertical. When the angle of the first surface A to the liquid surface of the reducing solution becomes vertical or approximately vertical, it is preferable that the reducing is sufficient because generated hydrogen on reducing is less likely to stay on the surface of the cation exchange membrane 1.

After immersion with the reducing solution, the reduced membrane is washed with ion exchanged water. After the reducing, the sulfonic acid group or the like is bonded to a cation (for example Na⁺) of the reducing solution. After the washing, the washed member is immersed in an acid solution so that the cation exchanging of the cation exchange membrane occurs. For example, Na+ is exchanged with proton. The acid immersing treatment can be performed under warmed condition. After the acid immersing treatment, the electrolyte membrane 100 containing noble metal particles is obtained by washing the treated member with ion exchanged water.

When the cation exchange membrane 1 which is impregnated with the cationic noble metal complex ions is treated in an atmosphere of reducing gas, the cation exchange membrane 1 which is impregnated with the cationic noble metal complex ions is placed in a container of a reducing gas atmosphere (for example hydrogen gas) for the reducing treatment. It is preferable that the reducing gas is heated at higher than a room temperature (25 [°C]). It is preferable that a temperature of the container is 30 [°C] or more and 80 [°C] or less. When the reducing treatment is performed with using the reducing gas, the electrolyte membrane 1 including noble metal particle can be obtained without immersing the cation exchange membrane 1 in any liquid.

### (SECOND EMBODIMENT)

A second embodiment relates to a membrane electrode assembly (MEA). A schematic cross-sectional diagram of a membrane electrode assembly 200 is shown in FIG. 4.

The MEA 200 includes a first electrode 21, a second electrode 22, and an electrolyte membrane 23 provided between the first electrode 21 and the second electrode 22. The MEA 200 can be used for water electrolysis. The first electrode 21 includes a first support 21A and a first catalyst layer 21B. The second electrode 22 includes a second support 22A and a second catalyst layer 22B.

The membrane electrode assembly 200 according to embodiments can be used as an anode for producing ammonia by electrolysis. The membrane electrode assembly 200 according to embodiments can be used as a membrane electrode assembly of an electrolyzer for synthesizing ammonia. Hereinafter, an example of water electrolysis is described in the second embodiment and the other embodiments. The membrane electrode assembly 200 according to embodiments can be also used for the water electrolysis, for example, as a membrane electrode assembly for electrolysis of synthesizing ammonia so that ultrapure water is supplied to an anode, proton and oxygen is produced in the anode by decomposing water, the produced proton passes through an electrolyte membrane, and ammonia is synthesized by binging nitrogen provided to a cathode, protons, and electrons. The MEA 200 according to embodiments can be also used as a cathode for producing hydrogen by electrolyzing ammonia. The membrane electrode assembly 200 according to embodiments can be used for a hydrogen generation apparatus. Hereinafter, an example of water electrolysis is described in the second embodiment and the other embodiments. The membrane electrode assembly 200 according to embodiments can be used for the water electrolysis, for example, as a membrane electrode assembly for electrolysis of decomposing ammonia so that ammonia is supplied to a cathode, proton and nitrogen is produced in the cathode by decomposing ammonia, the produced proton passes through an electrolyte membrane, and hydrogen is synthesized by binging protons and electrons.

The first electrode 21 is, for example, an anode electrode. The first catalyst layer 21B of the first electrode 21 includes, for example, an oxide including Ir and/or Ru.

The second electrode 22 is, for example, a cathode electrode. The second catalyst layer 22B of the second electrode 22 includes, for example, Pt Ru.

The electrolyte membrane 100 including noble metal particles is used for the electrolyte membrane 23. It is preferable that the first side 1A if the electrolyte membrane 100 including noble metal particles are placed on the first electrolyte 21 side which is, for example, the anode electrode.

The first electrode 21 is adjacent to one side of the electrolyte membrane 23 and includes the first catalyst layer 21B adjacent to the electrolyte membrane 23 and the first support 21A adjacent to the first catalyst layer 21B.

The second electrode 22 is adjacent to the other side of the electrolyte membrane 23 and includes the second catalyst layer 22B adjacent to the electrolyte membrane 23 and the second support 22A adjacent to the second catalyst layer 22B.

The MEA using the electrolyte membrane 100 including noble metal particles reduces leakage of hydrogen.

### (THIRD EMBODIMENT)

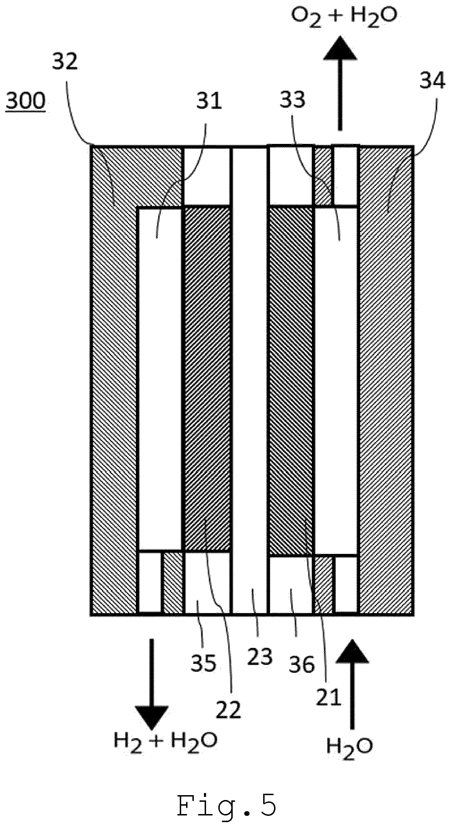

A third embodiment relates to electrochemical cell. A cross-sectional diagram of the electrochemical cell 300 according to the third embodiment is illustrated in FIG. 5.

The electrochemical cell 300 according to the third embodiment as illustrated in FIG. 5 includes a second electrode (cathode) 22, a first electrode (anode) 21, a electrolyte membrane 23, a cathode feeder 31, a separator 32, a anode feeder 33, a separator 34, a gasket (seal) 35, and a gasket (seal) 36.

For example, the electrolyte membrane 100 including noble metal particles of the embodiment is used for the electrolyte membrane 23. The anode feeder 31 and the cathode feeder 33 is not limited as long as it passes gas and water. The anode feeder 31 and the cathode feeder 33 may be integrated with the separator 32 and the separator 34, respectively. Specifically, the separator 32 and the separator 34 are not limited to a separator having a flow passage for water or the like and gas or a separator having porousness. By virtue of using the electrolyte membrane 100 including noble metal particles according to the embodiment, the electrochemical cell 300 has excellent durability.

In the electrochemical cell 300 of FIG. 5, un-illustrated electrodes are connected to the anode feeder 31 and the cathode feeder 33 and reactions occur at the cathode 22 and the anode 21. Water or the like is supplied to the anode 21 and water is decomposed to proton, oxygen, and electron at the anode 21. The support for the electrode and the feeder are porous member, and the porous member functions as a passage board. The formed water and un-reacted water are extracted, and proton and electron are used for a cathode reaction. The cathode reaction is that proton and electron react, and hydrogen is formed. The formed hydrogen and/or formed oxygen can be used as a fuel-cell fuel or the other apparatus. The separator 32 and the separator 34 hold the membrane electrode assembly 200. The airtightness of the electrochemical cell 300 is secured by the gasket 35 and the gasket 36.

### (FOURTH EMBODIMENT)

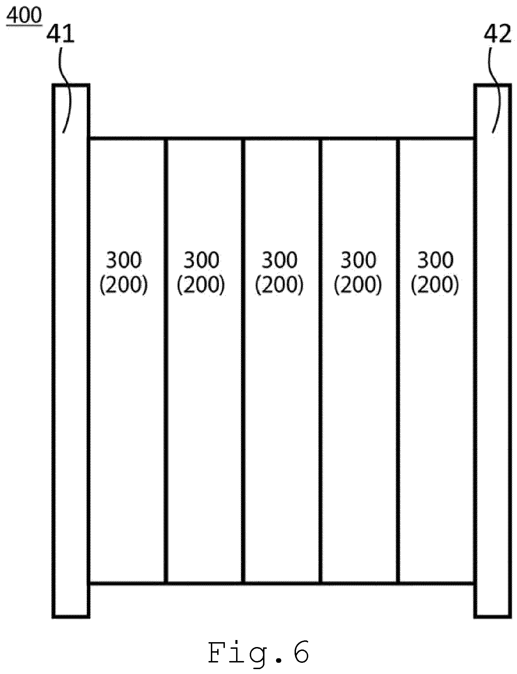

The fourth embodiment relates to a stack. FIG. 6 illustrate a schematic cross-sectional diagram of stack. The stack 400 according to the fourth embodiment illustrated in FIG. 5 is configured so that two or more of the MEAs 200 or the electrochemical cells 300 are connected in series. Tightening plates 41 and 42 are attached to both ends of the electrochemical cells 300.

The voltage of a single MEA 200 or the electrochemical cell 300 is low. Therefore, high voltage can be obtained by structuring the stack 400 in which two or more of the MEAs 200 or the electrochemical cells 300 are connected in series. The amount of hydrogen generated in the electrochemical cell 300 composed of a single MEA 200 is small. Therefore, a large amount of hydrogen can be obtained by structuring the stack 400 in which two or more of the electrochemical cells are connected in series.

### (FIFTH EMBODIMENT)

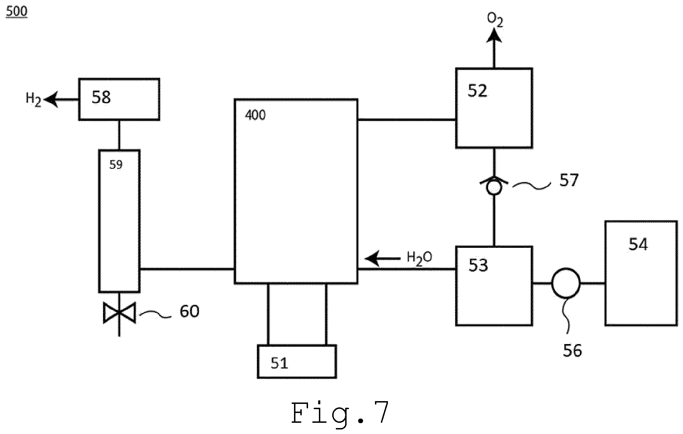

A fifth embodiment relates to an electrolyzer. FIG. 7 illustrates a conceptual diagram of the electrolyzer according to the fifth embodiment. The electrolyzer 500 uses the electrochemical cell 300 or the stack 400. The electrolyzer of FIG. 7 is a water electrolyzer. The following is an explanation of an electrolyzer using a water electrolyzer as an example. For example, when hydrogen is generated from ammonia, an apparatus having the other structure using the electrolyte membrane 100 including noble metal particles is preferable.

As shown in FIG. 7, water electrolysis cells stacked in series are used as the stack 400 for water electrolysis. A power supply 51 is attached to the stack 400, and voltage is applied between the anode and the cathode. A gas-liquid separator 52 for separating generated gas and unreacted water and a mixing tank 53 are connected to the anode side of the stack 400 for water electrolysis and water is sent to the mixing tank 53 by a pump 56 from an ion exchanged water producing apparatus 54 that supplies water for mixing in the mixing tank 53, and water is circulated to the anode mixed in the mixed tank 53 through a check valve 57 from the gas-liquid separator 52. Oxygen generated in the anode passes through the gas-liquid separator 52 so that an oxygen gas is obtained. On the other hand, a hydrogen purification device 59 is connected to the cathode side subsequent to a gas-liquid separator 58 to obtain high purity hydrogen. Impurities are discharged via a path having a valve 60 connected to the hydrogen purification device 59. In order to control the operating temperature stably, it is possible to control the heating of the stack and a mixing tank, the current density during thermal decomposition, and the like.

Hereinafter, examples of embodiments will be described.

### (Preparing For Coating Solution)

Coating solutions are prepared. Solution of the cation noble metal complex oxide salt is adjusted to a predetermined concentration, the predetermined amount of the solution is measured, and the measured solution is adjusted by adding water and water-soluble organic solvent (for example alcohols) to obtain the coating solution. Each of the adjusted solutions is shown in Table 1A and Table 1B. IPA shown in Table 1 represents isopropyl alcohol.

**[Table 1A]**

| | Cation Noble Metal Complex Salt | | Cationic Noble Metal Complex Ion Solution |
|---|---|---|---|
| | Compound | Concentration [mol/l] | Amount of Solution [g] |
| Comparative Example | H₂PtCL₆ | 0.03 | 5.0 |
| Example 1 | Pt(NH₃)₄Cl₂ | 0.03 | 5.0 |
| Example 2 | Pt(NH₃)₄Cl₂ | 0.03 | 5.0 |
| Example 3 | Pt(NH₃)₄Cl₂ | 0.03 | 5.0 |
| Example 4 | Pt(NH₃)₄Cl₂ | 0.03 | 10.6 |
| Example 5 | Pt(NH₃)₄Cl₂ | 0.03 | 5.0 |
| Example 6 | Pt(NH₃)₄Cl₂ | 0.03 | 5.0 |
| Example 7 | Pt(NH₃)₄Cl₂ | 0.03 | 5.0 |
| Example 8 | Pt(NH₃)₄Cl₂ | 0.03 | 10.0 |
| Example 9 | Pt(NH₃)₄Cl₂ | 0.03 | 15.0 |
| Example 10 | Pt(NH₃)₄Cl₂ | 0.03 | 15.0 |
| Example 11 | Pt(NH₃)₄Cl₂ | 0.05 | 10.0 |
| Example 12 | Pt(NH₃)₄Cl₂ | 0.06 | 10.0 |
| Example 13 | Pt(NH₃)₄Cl₂ | 0.06 | 5.0 |
| Example 14 | Pt(NH₃)₄Cl₂ | 0.06 | 10.0 |

**[Table 1B]**

| | Added Solvent | | |
|---|---|---|---|
| | Weight of Water [g] | Weight of IPA(g) | Weight of Ethylene Glycol (g) |
| Comparative Example | - | - | 1.5 |
| Example 1 | - | 1.5 | - |
| Example 2 | - | - | 1.5 |
| Example 3 | 5.0 | 3.0 | - |
| Example 4 | 2.0 | 10.6 | - |
| Example 5 | - | - | 1.62 |
| Example 6 | - | - | 1.62 |
| Example 7 | - | - | 0.44 |
| Example 8 | - | - | 3.0 |
| Example 9 | - | - | 9.0 |
| Example 10 | - | - | 4.5 |
| Example 11 | - | - | 1.5 |
| Example 12 | - | - | 3.0 |
| Example 13 | - | - | 1.5 |
| Example 14 | - | 3.0 | - |

### (Spraying Solution of Cationic noble metal complex salt)

Nafion115 (manufactured by DuPont) as cation exchange membrane is fixed on a spray coating apparatus, and the prepared solution of cationic noble metal complex solution is put in a sprayer. Nafion115 is mounted on a rotating drum, and the rotation drum is rotated. While drying with hot air, all the prepared solution is sprayed. A diameter of the rotating drum is 10 [cm], and a rotating speed is 450 [rpm]. After confirming that there is no droplet on the surface on which the solution is sprayed, the cation exchange membrane is washed with ion exchanged water. The spraying conditions are shown in FIG. 2.

### (Reduction to Noble metal particles)

The washed Nafion115 membrane is immersed at a room temperature (25 [°C]) in 1M of NaBH₄ solution for a predetermined period. The cationic noble metal complex ions are reduced to noble metal nano particles to obtain the Nafion115 membrane with dispersed the noble metal nano particles. The Nafion115 membrane with dispersed the noble metal nano particles is washed with ion exchanged water.

### (Cation Exchange (Na ion is exchanged to Proton)

The Nafion115 membrane with dispersed the noble metal nano particles is immersed in 10% of nitric oxide which is heated at 40 [°C] and take it out after 2 hours, and the acid treated member is washed sufficiently with ion exchanged water to obtain the Nafion115 membrane with dispersed the noble metal nano particles. By virtue of using the membrane manufactured by repeating spraying and drying alternately for the MEA of the water electrolyzer, hydrogen leakage is reduced.

**[Table 2]**

| | Sprayed Amount of Pt [mg/cm²] | Injection Pressure of Spraying [Mpa] | Immersion Duration in 1 M NaBH₄ [Hour] | Amount of Pt in Membrane [mg/cm²] | Loading Ratio[%] |
|---|---|---|---|---|---|
| Comparative Example | 0.061 | 0.5 | 2 | 0.0001 | 0.2 |
| Example 1 | 0.061 | 0.3 | 2 | 0.0270 | 44.3 |
| Example 2 | 0.061 | 0.5 | 24 | 0.0420 | 68.9 |
| Example 3 | 0.061 | 0.5 | 24 | 0.0370 | 60.7 |
| Example 4 | 0.129 | 0.5 | 4 | 0.0497 | 38.5 |
| Example 5 | 0.061 | 0.3 | 2 | 0.0199 | 32.6 |
| Example 6 | 0.061 | 0.3 | 4 | 0.0382 | 62.5 |
| Example 7 | 0.061 | 0.3 | 2 | 0.0206 | 33.8 |
| Example 8 | 0.122 | 0.3 | 2 | 0.0677 | 55.4 |
| Example 9 | 0.183 | 0.3 | 2 | 0.0760 | 41.5 |
| Example 10 | 0.183 | 0.3 | 2 | 0.1080 | 59.0 |
| Example 11 | 0.133 | 0.5 | 4 | 0.0725 | 54.5 |
| Example 12 | 0.133 | 0.5 | 4 | 0.0817 | 61.4 |
| Example 13 | 0.067 | 0.5 | 4 | 0.0351 | 52.8 |
| Example 14 | 0.133 | 0.5 | 4 | 0.0796 | 59.8 |

Some elements are expressed only by element symbols thereof.

Hereinafter, clauses of embodiments are additionally noted.

Clause 1. A manufacturing method for electrolyte membrane including noble-metal particles comprising:
impregnating cationic noble metal complex ions with a first region of a surface of a cation exchange membrane by spraying solution containing the cationic noble metal complex ions on the cation exchange membrane and drying the sprayed member; and
applying a reducing treatment to the cation exchange membrane impregnated with the cationic noble metal complex ions.

Clause 2. The manufacturing method according to clause 1, wherein the cationic noble metal complex ion includes one or more kinds of ions of noble metals selected from the group consisting of Pt, Re, Rh, Ir, Pd, and Ru and a neutral molecule as a ligand.

Clause 3. The manufacturing method according to clause 2, wherein the neutral molecule is NH₃ or amine.

Clause 4. The manufacturing method according to any one of clauses 1 to 3, wherein the spraying and the drying are performed alternately and repeatedly. Clause 5. The manufacturing method according to any one of clauses 1 to 4, wherein hot air at 30 [°C] or more and 120 [°C] or less is applied to the cation exchange membrane in the impregnating the cationic noble metal complex ions. Clause 6. The manufacturing method according to any one of clauses 1 to 5, wherein a concentration of the cationic noble metal complex ion in the solution containing the cationic noble metal complex ion is 0.05 [wt%] or more and 5 [wt%] or less.

Clause 7. The manufacturing method according to any one of clauses 1 to 6, wherein the cation exchange membrane impregnated with the cationic noble metal complex ions is immersed in a reducing solution in the applying the reducing treatment.

Clause 8. The manufacturing method according to any one of clauses 1 to 7, wherein the cation exchange membrane impregnated with the cationic noble metal complex ions is treated in an atmosphere of heated hydrogen gas in the applying the reducing treatment.

Clause 9. An electrolyte membrane including noble metal particles comprising:
a cation exchange membrane having a first surface which is a main surface; and
noble metal particles on the first surface side excluding a peripheral region of the cation exchange membrane.

Clause 10. The electrolyte membrane according to clause 9, wherein
the noble metal particles are particles including one or more kinds of noble metal elements selected from the group consisting of Pt,Re,Rh,Ir,Pd, and Ru,
an average circumscribed circle diameter of the noble metal particles is 0.5 [nm] or more and 1000 [nm] or less, and
the amount of the noble metal particles included on the first surface side of the cation exchange membrane is 0.01 [mg/cm²] or more and 1 [mg/cm²] or less.

Clause 11. The electrolyte membrane according to clause 9 or 10, wherein the cation exchange membrane has sulfonic acid groups.

Clause 12. A membrane electrode assembly comprising:
a first electrode including a first support and a first catalyst layer on the first support;
a second electrode includes a second support and a catalyst layer on the second support; and
the electrolyte membrane according to any one of clauses 9 to 11.

Clause 13. An electrochemical cell comprising:
the membrane electrode assembly according to clause 12.

Clause 14. A stack comprising:
the membrane electrode assembly according to clause 12.

Clause 15. An electrolyzer comprising:
the stack according to clause 14.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A manufacturing method for electrolyte membrane including noble-metal particles comprising:
impregnating cationic noble metal complex ions with a first region of a surface of a cation exchange membrane by spraying solution containing the cationic noble metal complex ions on the cation exchange membrane and drying the sprayed member; and
applying a reducing treatment to the cation exchange membrane impregnated with the cationic noble metal complex ions.

2. The manufacturing method according to claim 1, wherein the cationic noble metal complex ion includes one or more kinds of ions of noble metals selected from the group consisting of Pt, Re, Rh, Ir, Pd, and Ru and a neutral molecule as a ligand.

3. The manufacturing method according to claim 2, wherein the neutral molecule is NH₃ or amine.

4. The manufacturing method according to any one of claims 1 to 3, wherein the spraying and the drying are performed alternately and repeatedly.

5. The manufacturing method according to any one of claims 1 to 4, wherein hot air at 30 [°C] or more and 120 [°C] or less is applied to the cation exchange membrane in the impregnating the cationic noble metal complex ions.

6. The manufacturing method according to any one of claims 1 to 5, wherein a concentration of the cationic noble metal complex ion in the solution containing the cationic noble metal complex ion is 0.05 [wt%] or more and 5 [wt%] or less.

7. The manufacturing method according to any one of claims 1 to 6, wherein the cation exchange membrane impregnated with the cationic noble metal complex ions is immersed in a reducing solution in the applying the reducing treatment.

8. The manufacturing method according to any one of claims 1 to 7, wherein the cation exchange membrane impregnated with the cationic noble metal complex ions is treated in an atmosphere of heated hydrogen gas in the applying the reducing treatment.

9. An electrolyte membrane including noble metal particles comprising:
a cation exchange membrane having a first surface which is a main surface; and
noble metal particles on the first surface side excluding a peripheral region of the cation exchange membrane.

10. The electrolyte membrane according to claim 9, wherein
the noble metal particles are particles including one or more kinds of noble metal elements selected from the group consisting of Pt,Re,Rh,Ir,Pd, and Ru,
an average circumscribed circle diameter of the noble metal particles is 0.5 [nm] or more and 1000 [nm] or less, and
the amount of the noble metal particles included on the first surface side of the cation exchange membrane is 0.01 [mg/cm²] or more and 1 [mg/cm²] or less.

11. The electrolyte membrane according to claim 9 or 10, wherein the cation exchange membrane has sulfonic acid groups.

12. A membrane electrode assembly comprising:
a first electrode including a first support and a first catalyst layer on the first support;
a second electrode includes a second support and a catalyst layer on the second support; and
the electrolyte membrane according to any one of claims 9 to 11.

13. An electrochemical cell comprising:
the membrane electrode assembly according to claim 12.

14. A stack comprising:
the membrane electrode assembly according to claim 12.

15. An electrolyzer comprising:
the stack according to claim 14.
